Europäisches Patentamt

European Patent Office

Office européen des brevets

(11) Veröffentlichungsnummer: **0 024 523**
**B1**

(12) **EUROPÄISCHE PATENTSCHRIFT**

(45) Veröffentlichungstag der Patentschrift: **28.11.84**

(21) Anmeldenummer: **80103985.0**

(22) Anmeldetag: **10.07.80**

(51) Int. Cl.³: **H 02 P 13/22, H 02 M 3/335**

(54) **Eintakt-Durchflussumrichter zur Erzeugung galvanisch getrennter Ausgangsgleichspannungen.**

(30) Priorität: **31.07.79 DE 2931042**

(43) Veröffentlichungstag der Anmeldung:
**11.03.81 Patentblatt 81/10**

(45) Bekanntmachung des Hinweises auf die
Patenterteilung:
**28.11.84 Patentblatt 84/48**

(84) Benannte Vertragsstaaten:
**AT BE CH DE FR GB IT LI NL SE**

(56) Entgegenhaltungen:
**EP-A-0 014 833**
**DE-A-2 613 806**
**DE-C-2 608 167**
**IBM TECHNICAL DISCLOSURE BULLETIN,
Band 20, Nr. 11A, April 1978 New York M.S.
MILEWSKI "Synchronous Switching regulator"
Seiten 4272 bis 4275**
**Patents Abstracts of Japan, Band 2, Nr.10,
25.Januar 1978, Seite 10326E77**
**ELEKTRONIK, Band 23, Nr. 8, 1974 P.
SCHÜSSLER "Stromversorgungssysteme für
Computer" Seiten 299 bis 302**

(73) Patentinhaber: **Siemens Aktiengesellschaft
Berlin und München Wittelsbacherplatz 2
D-8000 München 2 (DE)**

(72) Erfinder: **Brakus, Bogdan, Dipl.-Ing.
Ihleweg 4
D-8031 Puchheim (DE)**

**Beschreibung**

Die Erfindung bezieht sich auf einen Eintakt-Durchflußumrichter mit einem impulsbreitengesteuerten Halbleiterschalter im Umrichter-Hauptstromkreis und mit einem Leistungstransformator mit mehreren Sekundärwicklungen zur Erzeugung galvanisch getrennten Ausgangsgleichspannungen, wobei in wenigstens einem Ausgangskreis des Eintakt-Durchflußumrichters ein in Abhängigkeit von der Ausgangsspannung dieses Ausgangskreises impulsbreitengesteuerter Transistorschalter mit eigener Hilfssteuerschaltung vorgesehen ist, dessen Ausgangsimpulse zeitlich innerhalb der Ausgangsimpulse des im Hauptstromkreis angeordneten Halbleiterschalters liegen und der jeweils gleichzeitig mit dem im Umrichter-Hauptstromkreis leitend gesteuert wird, wobei die Abschaltung des in einem Ausgangskreis vorgesehenen Transistors jeweils durch Kurzschließen einer Wicklung eines Impuls-Steuerübertragers in Abhängigkeit von der Ausgangsspannung des entsprechenden Ausgangskreises erfolgt, wobei dem Impulsübertrager eine Einschaltvorrichtung und eine Abschaltvorrichtung vorgeschaltet sind und die Emitter-Kollektor-Strecke eines Transistors der Abschaltvorrichtung parallel zu einer Wicklung des Impulsübertragers liegt.

Ein derartiger Eintakt-Durchflußumrichter ist bereits aus der DE—C3—2 608 167 bekannt. Bei dem bekannten Durchflußumrichter werden die Abschaltsignale für den Transistor aus dem Vergleich einer Summenspannung mit einer Sollwertspannung in einem Schwellenschalter einer Hilfssteuereinrichtung abgeleitet, wobei die Summenspannung vom IST-Wert der Ausgangsspannung und einer den Anstieg des Kollektorstromes des Schalttransistors wiedergebenden periodischen Meßspannung gebildet wird. Der Schalttransistor wird über einen Impulsübertrager angesteuert, der zusätzlich zu einer an der Basis-Emitter-Strecke des Schalttransistors liegenden Wicklung eine Stromrückkopplungswicklung und eine an eine Hilfssteuerschaltung angeschlossene Steuerwicklung aufweist. Die Hilfssteuerschaltung enthält eine bistabile Kippstufe, der zwei Schwellwertschalter vor- und zwei Transistoren als Ein- und Abschaltvorrichtung nachgeschaltet sind. Von den beiden Schwellwertschaltern dient einer zur Spannungsregelung, der andere zur Strombegrenzung.

Bei dem bekannten Umrichter wird der Einschaltzeitpunkt des Schalttransistors von der an der Sekundärwicklung des Leistungstransformators anstehenden Spannung abgeleitet, die über eine Konstantstromschaltung mit einer Z-Diode, einem Steuertransistor sowie zwei Widerständen einen öffnenden Strom über den Steuerübertrager in die Basis-Emitterstrecke des Stelltransistors treibt, solange ein von der bistabilen Kippstufe gesteuerter weiterer Steuertransistor gesperrt bleibt, der als Abschalttransistor mit seiner Emitter-Kollektor-Strecke parallel zur Steuerwicklung des Impulsübertragers liegt.

Die Hilfssteuerschaltung ist im Hinblick auf die erforderliche bistabile Kippstufe und die Ausgestaltung und logische Verknüpfung der Ein- und Abschaltvorrichtung mit einem relativ großen Aufwand verbunden. Außerdem sind beim Einschalten des Schalttransistors relativ große Verzögerungen im Regelkreis vorhanden, die mit einer Verringerung des verfügbaren Tastgrades verbunden sind.

Ferner wurde in der EP—A1—14833, deren Inhalt gemäß Artikel 54(3) EPÜ als Stand der Technik gilt, bereits eine Schaltungsanordnung zur Regelung der Ausgangsspannung eines Eintakt-Durchflußumrichters mit Freilaufdiode und daran angeschlossener Drossel im Hauptstromkreis vorgeschlagen, die einen mit seiner Schaltstrecke zwischen Eingang und Ausgang des Umrichters angeordneten elektronischen Schalter und einen der Steuerstrecke des elektronischen Schalters vorgeschalteten eine bistabile Kippstufe enthaltenden Steuereinrichtung zur Impulsbreitensteuerung enthält. Die bistabile Kippstufe ist durch Taktimpulse eines Taktgebers setzbar und durch Abschaltimpulse rücksetzbar, die von einem eine Vergleichsspannungsquelle enthaltenden meßgrößengesteuerten Schwellwertschalter abgegeben werden. Der Kondensator einer am Ausgang des Umrichters angeschlossenen Kondensator-Widerstand-Serienschaltung und eine Vergleichsspannungsquelle sind mit ein und demselben, einen Bezugspunkt bildenden Anschluß des Ausgangs verbunden. Der gegenüber dem Bezugspunkt Spannung führende Anschluß des Kondensators ist über einen Spannungsteiler an den Meßgrößeneingang und der mit der Freilaufdiode verbundene Anschluß der Drossel über einen weiteren Widerstand an den Meßgrößeneingang des Schwellwertschalters geführt. Der zwischen Spannung führendem Anschluß des Kondensators und Schwellwertschalter liegende Widerstand des Spannungsteilers ist durch einen Kondensator überbrückt, dessen Kapazität wesentlich kleiner bemessen ist als die Kapazität des Kondensators der Kondensator-Widerstand-Serienschaltung. Der Wert des Widerstandes der Kondensator-Widerstand-Serienschaltung ist wesentlich, insbesondere mindestens um eine Größenordnung kleiner bemessen als der Wert der Widerstände des Spannungsteilers.

Aufgabe der Erfindung ist es, den mit einem Eintakt-Durchflußumrichter der eingangs genannten Art verbundenen Aufwand weiter zu verringern und den Transistor des Ausgangskreises jeweils möglichst unverzögert vom Hauptkreis her einzuschalten.

Gemäß der Erfindung wird der Durchflußumrichter zur Lösung dieser Aufgabe derart ausgebildet. daß die Einschaltvorrichtung durch eine Serienschaltung aus einem Widerstand mit einer Diode gebildet ist und daß eine Wicklung des Impulsübertragers über die Serienschaltung an eine eigene Einschaltwicklung des Leistungsübertragers angeschlossen ist und daß die Abschaltvorrichtung einen Schwellwertschalter mit offenem Kollektor-Ausgang enthält, dessen einem Eingang eine ausgangsspannungsabhängige Steuergröße und dessen anderem Eingang eine Vergleichsgröße zugeführt sind und der mit seinem Ausgang über eine einen Kondensator und einen Ladewiderstand enthaltende Zeitschaltung nach Art eines Monoflops an den mit seiner Emitter-Kollektor-Strecke parallel zu einer eigenen Abschaltwicklung des Impulsübertragers liegenden Transistor der Abschaltvorrichtung geführt ist.

Durch diese Maßnahmen ergibt sich ein Eintakt-Durchflußumrichter, der mit besonders einfachen Mitteln realisierbar ist und sich auf kleinem Raum unterbringen läßt. Da das Einschalten des transistors des Ausgangskreises vom Hauptkreis her jeweils ohne Beteiligung aktiver Schaltelemente und daher praktisch verzögerungsfrei erfolgt, ergibt sich als weiterer Vorteil, daß der für die Nachregelung benötigte Bereich des Tastgrades voll und ganz zur Verfügung steht. Der geringe Aufwand wirkt sich in besonderem Maße aus, wenn bei kleiner Ausgangsleistung eine große Zahl von Ausgangsspannungen benötigt wird.

In weiterer Ausgestaltung der Erfindung wird der Durchflußumrichter derart ausgebildet, daß die Zeitschaltung zwei Stromzweige enthält, von denen der eine zwischen dem Ausgang des Schwellwertschalters und einer Hilfsspannung liegt und durch eine Serienschaltung aus einem Speicherkondensator und einem Entladewiderstand gebildet ist und von denen der andere zwischen dem Ausgang des Schwellwertschalters und Bezugspotential liegt und wenigstens einen Ladewiderstand enthält.

Durch diese Maßnahmen läßt sich auf besonders einfache Weise sicherstellen, daß der in der Nachregelschaltung enthaltene Schalttransistor mit Sicherheit mindestens so lange gesperrt ist, wie der im Hauptstromkreis angeordnete Halbleiterschalter noch durchgeschaltet ist.

In Weiterbildung der Erfindung wird der Durchflußumrichter entsprechend der eingangs genannten EP—A1—14833 derart ausgebildet, daß der Meßgrößeneingang des Schwellwertschalters an den Kondensator einer am Ausgang des Ausgangskreises liegenden Kondensator - Widerstand - Serienschaltung angeschlossen ist und daß der Kondensator der Kondensator-Widerstand-Serienschaltung und eine Vergleichsspannungsquelle mit ein und demselben, einen Bezugspunkt bildenden Anschluß des Ausgangs verbunden sind und daß der gegenüber dem Bezugspunkt Spannung führende Anschluß des Kondensators über einen Spannungsteiler an den Meßgrößeneingang des Schwellwertschalters geführt ist und daß der Meßgrößeneingang über einen weiteren Widerstand mit einem eingangsseitigen Anschluß einer Drossel als Quelle für eine der Eingangsspannung proportionale Spannung geführt ist und daß der zwischen Spannung führendem Anschluß des Kondensators und Schwellwertschalter liegende Widerstand des Spannungsteilers durch einen Kondensator überbrückt ist. Auf diese Weise wird erreicht, daß der Regelkreis von der Eingangsspannung und von Laständerungen als Störgroßen beeinflußt wird und daß diese beiden Störgrößen sowohl statisch als auch dynamisch wirken.

Zweckmäßigerweise ist der Wert des Widerstandes der Kondensator-Widerstand-Serienschaltung mindestens um eine Größenordnung kleiner bemessen als der Wert der Widerstände des Spannungsteilers.

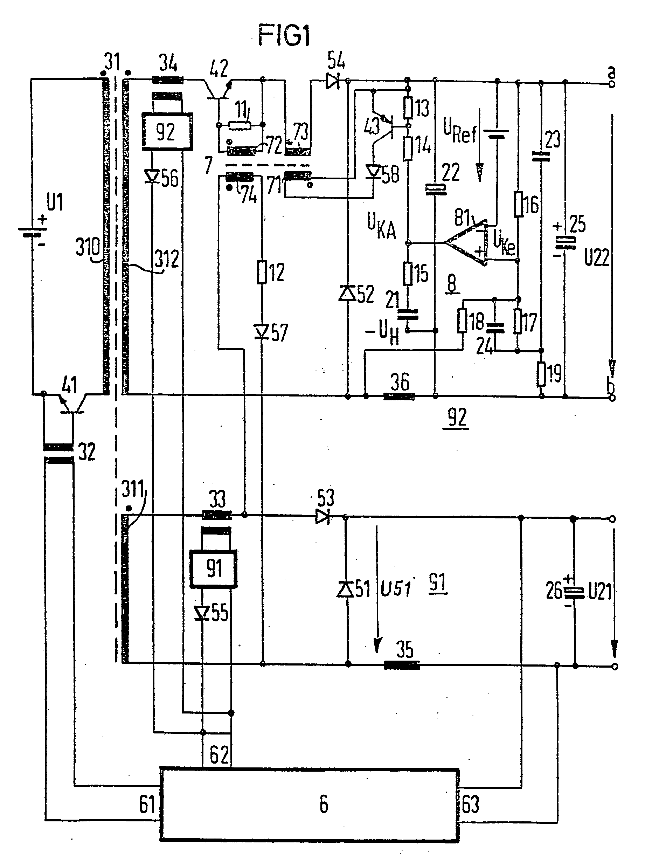

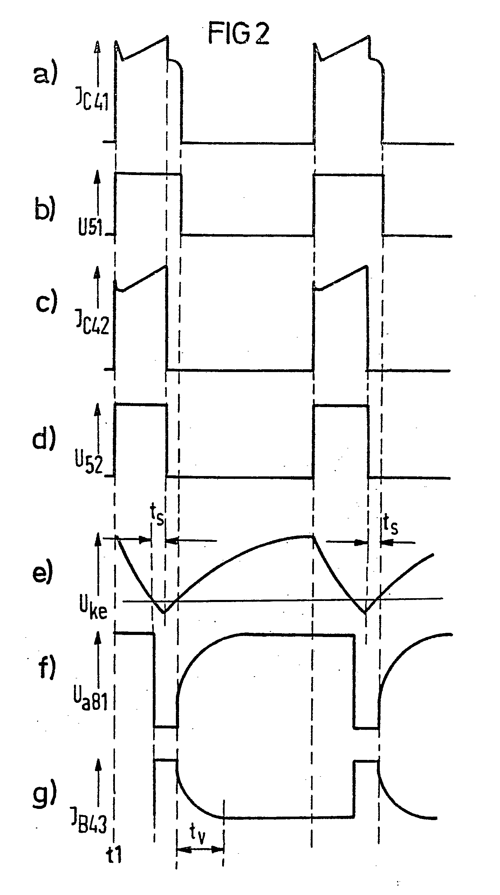

Die Erfindung wird anhand des in Figur 1 gezeigten Ausführungsbeispiels und anhand der in Figur 2 dargestellten Diagramme näher erläutert.

Es zeigen Figur 1 eine Eintakt-Durchflußumrichter zur Erzeugung zweier galvanisch voneinander getrennter, geregelter Gleichspannungen und

Figur 2 Spannungs- und Stromdiagramme für den in Figur 1 gezeigten Durchflußumrichter.

Der Durchflußumrichter nach Figur 1 dient zur Erzeugung von mehreren genau geregelten Ausgangsspannungen. Dabei ist unter einem Durchflußumrichter ein Gleichspannungsumrichter zu verstehen, der im durchgeschalteten Zustand des Stelltransistors Leistung abgibt.

Der Umrichter liefert EMK-verkoppelte Spannungen, die in einem von Leerlauf bis Vollast reichenden Lastbereich mit Schaltern im sekundären Impulskreis durch Pulsbreitenverschiebung geregelt werden.

Eine derartige geschaltete Nachregelung bietet in einem besonders weiten Strombereich Vorteile gegenüber vergleichbaren stetigen Reglern.

Der Durchflußumrichter nach Fig. 1 erzeugt aus einer Eingangs-Gleichspannung $U_1$ zwei geregelte Ausgangsspannungen U21 und U22 über zwei Ausgangskreise 91 und 92. Er enthält eine über einen Übertrager 32 gesteuerten Stelltransistor 41, der mit seiner Emitter-Kollektor-Strecke zwischen der Gleichspannungsquelle für die Spannung U1 und der Primärwicklung 310 des Leistungstransformators 31 liegt. Ein an die Sekundärwicklung 311 angeschlossener erster Ausgangskreis 91 enthält eine Gleichrichterdiode 53, eine Freilaufdiode 51 sowie eine LC-Siebschaltung 35, 26.

Die Steuerung des Stelltransistors 41 erfolgt mittels Einschalt- und Sperrimpulsen, die vom Hauptsteuerteil 6 über den Steuerübertrager 32 an die Basis-Emitterstrecke gelangen. Dieser Hauptsteuerteil 6 ist an den Ausgang des ersten Ausgangskreises angeschlossen und regelt die Ausgangsspannung U21 dieses Ausgangskreises auf einen konstanten Wert.

Um auch im Ausgangskreis 92 der Sekundärwicklung 312 eine geregelte Ausgangsspannung U22 zu erhalten, ist eine eigene Nachregelung vorgesehen, die aus einem zusätzlichen Impulsbreitenregler mit einem Hilfssteuerteil 8 und einem weiteren Stelltransistor 42 besteht, der über einen Übertrager 7 aus der Hilfssteuerschaltung 8 gesteuert wird.

Außer der Kollektor-Emitterstrecke des Stelltransistors 42 befindet sich im Längszweig des Ausgangskreises 92 für die Spannung U22 eine Gleichrichterdiode 54. Die Diode 54 ist so gepolt, daß sie bei leitend gesteuertem Transistor 42 ebenfalls Strom führt.

Im Anschluß an die Gleichrichterdiode 54 und vor der im anderen Stromzweig liegenden Drossel 36 ist in einem Querzweig die Freilaufdiode 52 angeordnet, so daß der durch die Drossel 36 fließende Strom auch bei gesperrter Gleichrichterdiode 54 weiterfließen kann.

Solange der Nachregler nicht eingreift, führt der Transistor 42 den Strom während der ganzen Einschaltdauer des Haupttransistors 41.

Die Regelung der zweiten Ausgangsspannung U22 wird durch eine geringfügige Beschneidung der von der zweiten Sekundärwicklung 312 angebotenen Spannungszeitfläche erreicht. Dies geschieht verlustlos durch füheres Abschalten des Schalttransistors 42 mittels der Hilfssteuerschaltung 8.

Die Steuerung des Schalttransistors 42 erfolgt über den Steuerimpulsübertrager 7, der eine an die Hilfssteuerschaltung 8 angeschlossene Primärwicklung 71, eine mit der Basis-Emitterstrecke des Stelltransistors 42 verbundene Steuerwicklung 72 und eine im Emitterstromkreis des Stelltransistors liegende Stromrückkopplungswicklung 73 aufweist. Die Wicklungen 71 und 74 lassen sich dabei hinsichtlich ihrer Windungszahlen an die jeweiligen Verhältnisse optimal anpassen. Die Wicklung 71 erhält insbesondere eine große Windungszahl, um mit einem kleinen Steuerstrom einen großen Laststrom ausschalten zu köhnen. Die Wicklung 74 hat vorzugsweise eine geringere Zahl von Windungen. Das potentialfreie Einschalten des Schalttransistors 42 erfolgt über die eigene Einschaltwicklung 74, die aus einem der sekundären Transformatorkreise gespeist wird, gleichzeitig mit dem Durchsteuern des im Primärkreis des Durchflußumrichters gelegenen Stelltransistors 41. Für den Abschaltvorgang des Stelltransistors 42 wird in Abhängigkeit von der Ausgangsspannung U22 in der Hilfssteuerschaltung 8 ein Abschaltsignal erzeugt, das über die Emitter-Kollektorstrecke des Transistors 43 und die zur Basis-Kollektorstrecke entgegengesetzt gepolte Diode 58 die Primärwicklung 71 des Steuerübertragers 7 kurzschließt. Die Abmagnetisierung des Steuerimpulsübertragers 7 erfolgt daher definiert über den parallel zur Wicklung 72 liegenden Widerstand 11, nachdem der Schalttransistor 42 ausgeräumt und gesperrt wurde.

Der Einschaltzeitpunkt des Stelltransistors 42 wird von der an der Sekundärwicklung 311 des Leistungstransformators 31 anstehenden Spannung abgeleitet, die über eine Serienschaltung aus eine Diode 57 und dem Widerstand 12 an die Einschaltwicklung 74 gelegt ist und einen öffnenden Strom über den Steuerübertrager 7 in die Basis-Emitterstrecke des Stelltransistors 42 treibt, solange der von der Hilfssteuerschaltung 8 gesteuerte Schalttransistor 43 gesperrt bleibt. Parallel zum Ausgang a, b liegt der Siebkondensator 25, an dem die Ausgangsspannung U22 anliegt.

Die Hilfssteuerschaltung 8 enthält eine Serienschaltung, bestehend aus dem Kondensator 23 und dem Widerstand 19, die an den Ausgang a, b angeschlossen ist. Parallel zum Kondensator 23 liegt die aus den Widerständen 16 und 17 bestehende Serienschaltung. Parallel zum Widerstand 17 liegt der Kondensator 24.

Der Kondensator 23 und die Vergleichsspannungsquelle, die die Referenzspannung $U_{Ref}$ liefert, liegen jeweils mit einem Anschluß am Ausgangsanschluß a. Der andere Anschluß der Vergleichsspannungsquelle ist mit dem Minuseingang des Schwellwertschalters 81 verbunden, der ein als Komparator geschalteter Operationsverstärker ist. Der Pluseingang des Schwellwertschalters 81 ist sowohl an den Verbindungspunkt der Widerstände 16 und 17 angeschlossen als auch über den Widerstand 18 an den Verbindungspunkt von Freilaufdiode 52 und Drossel 36 geführt.

Bei der Schaltungsanordnung nach Figur 1 ist die Drossel 36 in der zum Anschluß b führenden Minusleitung angeordnet. Wird die Drossel in die zum Anschluß a führende Plusleitung eingeführt, so sind die Vergleichsspannungsquelle für die Referenzspannung $U_{Ref}$ und der Kondensator 23 an die zum Anschluß b führende Minusleitung anzuschließen.

Für die Bemessung gilt jeweils

$$R_{19} \ll R_{16}; \ R_{19} \ll R_{17}; \ C_{24} \ll C_{23},$$

wobei $R_{16}$, $R_{19}$ und $R_{17}$ die Werte der Widerstände 16, 19 und 17 sind und wobei C24 und C23 die Kapazitäten der Kondensatoren 24 und 23 sind.

Das Abschaltsignal wird vom Komparator bzw. Schwellwertschalter 81 abgegeben. Der Ausgang des Schwellwertschalters 81 ist über die Serienschaltung der Widerstände 13 und 14 an den Anschluß a und über die Serienschaltung aus dem Widerstand 15 und dem Kondensator 21 an die gegenüber Anschluß a negative Hilfsspannung $U_H$ geführt. Parallel zum Widerstand 13 liegt die Basis-Emitterstrecke des Transistors 43. Der Widerstand 15 ist als Schutzwiderstand so bemessen, daß der Komparator nicht zerstört wird.

Durch den Sperrimpuls des Schwellwertschalters 81 wird der Kondensator 21 entladen. Gleichzeitig wird der Transistor 43 leitend und räumt den Transistor 42 aus. Nachdem der Sperrimpuls abgelaufen ist, bleibt der Transistor 43 leitend, da über den Widerstand 13 und die Basis-Emitterstrecke des Transistors 43 der Kondensator 21 wieder aufgeladen wird. Die sich dadurch ergebende Verzögerungszeit ist durch entsprechende Bemessung der RC-Serienschaltung 13, 14, 15, 21 so gewählt, daß ein Wiedereinschalten des Transistors 42, das durch die Tastgraddifferenz der beiden Lastkreise an sich möglich wäre, verhindert wird.

Die Sperrphase geht aus Figur 2, Diagramme e—g, hervor.

Die Diagramme a—d zeigen den Kollektorstrom $I_{C41}$ im Stelltransistor 41 bzw. die Spannung $U_{51}$ an der Freilaufdiode 51 im Hauptkreis, den Kollektorstrom $I_{C42}$ im Stelltransistor 42 und die Spannung $U_{52}$ an der Freilaufdiode 52 im nachgeregelten Kreis. Die ungeregelte Spannung des zweiten Kreises kann z.B. 12 V betragen und durch Tastgradverkürzung auf 8,3 V geregelt werden.

Die beschriebene Regelungsart ist für die Nachregelung von Durchflußumrichtern mit dem maximalen Tastgrad $\gamma$ max=0,5 geeignet. Die Taktfrequenz beträgt insbesondere 20—24 kHz.

Der Ansteuerstrom für den Impulsübertrager 7 wird zweckmäßigerweise aus einem Ausgangskreis kleiner Spannung, insbesondere aus einem 5-V-Kreis bezogen, da die Steuerverluste,, vor allem die Verlustleistung im Vorwiderstand 12 dann besonders gering sind.

Die Spannungsreserve im nachzuregelnden Kreis soll mindestens die maximale mögliche statische Abweichung unter Breücksichtigung der Kollektor-Emitter-Sättigungsspannung des Schalttransistors abdecken. Mit etwas mehr Reserve, insbesondere 2—3 % kann auch das dynamische Verhalten erheblich verbessert werden. Praktisch liegt die benötigte Regelreserve vorzugsweise bei ca. 15 %.

Der Schalttransistor 42 mit dem Steuerimpulsübertrager 7 und die Durchlaßdiode 54 können gegebenenfalls in ihrer Reihenfolge miteinander vertauscht werden.

Ein lückender Betrieb bei der im Hauptkreis gelegenen Speicherdrossel soll nicht auftreten, da anderenfalls eine Einengung der Regelbereiche anderer Ausgänge möglich ist.

Für das in Figur 1 gezeigte Ausführungsbeispiel ergibt sich die folgende Wirkungsweise:

Der Schalttransistor 42 wird durch die an die Wicklung 74 des Impulsübertragers 7 angelegte Spannung eingeschaltet. Das Abschaltsignal wird mit Hilfe eines RC-Netzwerkes gewonnen und durch den Anstieg der Meßspannung $U_{ke}$ über den Wert der Referenzspannung $U_{Ref}$ ausgelöst. Dabei wird der Regelkreis im wesentlichen von der Eingangsspannung und von Laständerungen als Störgrößen beeinflußt. Diese beiden Störgrößen wirken sowohl statisch als auch dynamisch.

Die Meßspannung $U_{ke}$ besteht aus zwei Komponenten $U'_e$ und $u'_D$, die einander überlagert sind. Die Kondensator-Widerstand-Serienschaltung 23, 19 dient zur hochfrequenzmäßigen Trennung der Meßspannung von der Ausgangsspannung U22.

Die beiden Komponenten lassen sich wie folgt einzeln bestimmen:

Die von der Ausgangsspannung U22 herrührende Gleichspannungskomponente ergibt sich aus der Annahme, daß der Widerstand 18 gegen $\infty$ geht. Für diesen Fall gilt für die am Widerstand 16 liegende Spannung

$$U'_a = U_a \frac{R_{16}}{R_{16}+R_{17}+R_{19}} \qquad (1)$$

Die an der gesperrten Freilaufdiode 52 liegende Spannung $u_D$ ist der Eingangsspannung proportional. Aus dieser Spannung wird mit Hilfe der Schaltmittel 18, 24, 16 und 17 am Kondensator 24 eine aus e-Funktionen zusammengesetzte Dreieckspannung $u'_D$ erzeugt, deren zeitlicher Verlauf von der Spannung $u_D$ und vom Tastgrad $\gamma$ abhängt.

Das aus Stabilitätsgründen maximal zulässige Tastverhältnis wird durch den Quotienten

$$\frac{T}{\tau}$$

bestimmt. Dabei ergibt sich für den Grenzfall folgendes Tastverhältnis

$$\gamma_{grenz} = \frac{1}{\dfrac{T}{\tau}} \ln \frac{e^{T/\tau}+1}{2} \qquad (2)$$

Der Kondensator 24 spielt eine wichtige Rolle nicht nur bei der Gewinnung der Dreieckspannung, sondern wirkt zusammen mit dem Widerstand 17 als Differenzglied. Dadurch wird der Phasenrad vergrößert und die Stabilität allgemein erhöht.

Die in Fig. 1 gezeigte Schaltungsanordnung hat in vorteilhafter Weise eine hohe statische Genauigkeit der Ausgangsspannung. Ferner ergeben sich eine schnelle Ausregelung dynamischer Laständerungen und eine schnelle Ausregelung von Eingangsspannungs-schwankungen. Außerdem ergibt sich eine besonders geringe Störempfindlichkeit gegen hochfrequente Störungen.

Die Figur 2 zeigt Strom- und Spannungsverläufe im Hauptkreis und in den beiden Ausgangskreisen 91 und 92 für den Fall, daß der Stelltransistor 42 im Ausgangskreis 92 vor der Beendigung der über die Hauptsteuerung 6 für den Stelltransistor 41 vorgegebene Stromflußdauer gesperrt wird. In Figur 2 ist unter a der Kollektorstrom des primären Schalttransistors dargestellt; der treppenartige Verlauf der Stromkurve gibt deutlich die Wirkungswerise der Nachregelung mittels einer weiteren Impulsbreitensteuerung wieder; b zeigt den Spannungsverlauf an der Freilaufdiode des Hauptkreises, c den Kollektorstrom des Schalttransistors im nachgeregelten Kreis. Bei d ist der Spannungsverlauf an der Freilaufdiode des nachgeregelten Kreises angegeben. Ferner zeigen e die Wechselkomponente der Komperator-Eingangsspannung, f die Ausgangsspannung des Komperators und g den Basisstrom des Sperrtransistors mit dem verzögerten Abschalten. Mit $t_s$ ist die Speicherzeit des Transistors 42 bezeichnet.

Zur zentralen Strombegrenzung sind in die Ausgangskreise unmittelbar im Anschluß an den Transformator 31 Stromwandler 33 und 34 eingeschleift, die jeweils mit einer Bürde 91 bzw. 92 abgeschlossen sind. Beide Stromwandler sind über je eine Entkopplungsdiode 55 bzw. 56 an den Hauptsteuerteil 6 geführt.

**Patentansprüche**

1. Eintakt-Durchflußunrichter mit einem impulsbreitengesteuerten Halbleiterschalter (41) im Umrichter-Hauptstromkreis und mit einem Leistungstransformator (31) mit mehreren Sekundärwicklungen (311, 312) zur Erzeugung galvanisch getrennten Ausgangsgleichspannungen, wobei in wenigstens einem Ausgangskreis des Eintakt-Durchflußumrichters ein in Abhängigkeit von der Ausgangsspannung (U22) dieses Ausgangskreises impulsbreitengesteuerter Transistorschalter (42) mit eigener Hilfssteuerschaltung vorgesehen ist, dessen Ausgangsimpulse zeitlich innerhalb der Ausgangsimpulse des im Hauptstromkreis angeordneten Halbleiterschalters (41) liegen und der jeweils gleichzeitig mit dem im Umrichter-Hauptstromkreis leitend gesteuert wird, wobei die Abschaltung des in einem Ausgangskreis vorgesehen Transistors (42) jeweils durch Kurzschließen einer Wicklung (71) eines Impuls-Steuerübertragers (7) in Abhängigkeit von der Ausgangsspannung (U22) des entsprechenden Ausgangskreises erfolgt, wobei dem Impulsübertrager (7) ein Einschaltvorrichtung und eine Abschaltvorrichtung vorgeschaltet sind und die Emitter-Kollektor-Strecke eines Transistors (43) der Abschaltvorrichtung parallel zu einer Wicklung (71) des Impulsübertragers (7) liegt, dadurch gekennzeichnet, daß die Einschaltvorrichtung durch eine Serienschaltung aus einem Widerstand (12) mit einer Diode (57) gebildet ist und daß eine Wicklung (74) des Impulsübertragers über die Serienschaltung (12, 57) an eine eigene Einschaltwicklung (311) des Leistungsübertragers (31) angeschlossen ist und daß die Abschaltvorrichtung einen Schwellwertschalter (81) mit offenem Kollektor-Ausgang enthält, dessen einem Eingang (+) eine ausgangsspannungsabhängige Steuergröße und dessen anderem Eingang (—) eine Vergleichsgröße (U$_{Ref}$) zugefkhrt sind und der mit seinem Ausgang über eine einen Kondensator (21) und einen Ladewiderstand (13 ... 15) enthaltende Zeitschaltung nach Art eines Monoflops an den mit seiner Emitter-Kollektor-Strecke parallel zu einer eigenen Abschaltwicklung (71) des Impulsübertragers (7) liegenden Transistor (43) der Abschaltvorrichtung geführt ist.

2. Durckflußumrichter nach Anspruch 1, dadurch gekennzeichnet, daß die Zeitschaltung zwei Stromzweige enthält, von denen der eine zwischen dem Ausgang des Schwellwertschalters (81) und einer Hilfsspannung (—U$_H$) liegt und durch eine Serienschaltung aus einem Speicherkondensator (21) und einem Entladewiderstand (15) gebildet ist und von denen der andere zwischen dem Ausgang des Schwellwertschalters (81) und Bezugspotential liegt und wenigstens einen Ladewiderstand (13, 14) enthält.

3. Durchflußumrichter nach einem der Ansprüche 1 und 2, dadurch gekennzeichnet, daß der Meßgrößeneingang (+) des Schwellwertschalters (81) an den Kondensator (23) einer am Ausgang (a, b) des Ausgangskreises (92) liegenden Kondensator-Widerstand-Serienschaltung (23, 19) angeschlossen ist und daß der Kondensator (23) der Kondensator-Widerstand-Serienschaltung (23, 19) und eine Vergleichsspannungsquelle (U$_{Ref}$) mit ein und demselben, einen Bezugspunkt bildenden Anschluß (a) des Ausgangs (a, b) verbunden sind und daß der gegenüber dem Bezugspunkt Spannung führende Anschluß des Kondensators (23) über einen Spannungsteiler (16, 17) an den Meßgrößeneingang (+) des Schwellwertschalters (81) geführt ist und daß der Meßgrößeneingang (+) über einen weiteren Widerstand (18) mit einem eingangsseitigen Anschluß eine Drossel (36) als Quelle für eine der Eingangsspannung (U$_e$) proportionale Spannung geführt ist und daß der zwischen Spannung führendem Anschluß des Kondensators (23) und Schwellwertschalter (81) liegende Widerstand (17) des Spannungsteilers (16, 17) durch einen Kondensator (24) überbrückt ist.

4. Durchflußumrichter nach Anspruch 3, dadurch gekennzeichnet, daß der Wert des Widerstandes (19) der Kondensator-Widerstand-Serienschaltung (23, 19) mindestens um eine Größenordnung kleiner bemessen ist als der Wert der Widerstände (16, 17) des Spannungsteilers.

**Revendications**

1. Convertisseur monophasé sans blocage comportant un commutateur à semiconducteurs (41) commandé par des durées d'impulsions et monté dans le circuit principal du convertisseur et comportant un transformateur de puissance (31) possédant plusieurs enroulements secondaires (311, 312) servant à produire des tensions continues de sorties séparées galvaniquement, et dans lequel il est prévu dans au moins un circuit de sortie du convertisseur monophasé sans blocage un commutateur à transistor (42) commandé par des durées d'impulsions en fonction de la tension de sortie (U22) de ce circuit de sortie et comportant un circuit de commande auxiliaire particulier, dont les impulsions de sortie se situent dans le temps entre les impulsions de sortie du commutateur à semiconducteurs (41) monté dans le circuit principal et qui est placé à l'état conducteur respectivement en même temps que le circuit principal du convertisseur, et dans lequel le blocage du transistor (42) prévu dans un circuit de sortie est réalisé respectivement en court-circuitant un enroulement (71) d'un transformateur de commande d'impulsions (7) en fonction de la tension de sortie (U22) du circuit de sortie correspondant, et dans lequel un dispositif de mise à l'état passant et un dispositif de blocage sont branchés en amont du transformateur d'impulsions (7) et la voie émetteur-collecteur d'un transistor (43) du dispositif de blocage est montée en parallèle avec un enroulement (71) du transformateur d'impulsions (7), caractérisé en ce que le dispositif de mise à l'état passant est constitué par un montage série formé d'une résistance (12) et d'une diode (57), qu'un enroulement (74) du transformateur d'impulsions est raccordé par l'intermédiaire du circuit série (12, 57) à un enroulement particulier de mise à l'état passant (311) du transformateur de puissance (31) et que le dispositif de blocage contient un commutateur à valeur de seuil (81) dont la sortie du collecteur est ouverte et à une entrée (+) duquel une grandeur de commande dépendant de la tension de sortie est envoyée et à l'autre entrée (−) duquel une grandeur de référence (U$_{Ref}$) est envoyée, et dont la sortie est reliée par l'intermédiaire d'un circuit de commande temporelle réalisé à la manière d'une bascule monostable et contenant un condensateur (21), une résistance de charge (13 ... 15), au transistor (43) du dispositif de blocage, dont la voie émetteur-collecteur est montée en parallèle avec un enroulement particulier de blocage (71) du transformateur d'impulsions (7).

2. Convertisseur sans blocage suivant la revendication 1, caractérisé par le fait que le circuit de commande temporelle contient deux branches de circulation du courant, dont l'une est située entre la sortie du commutateur à valeur de seuil (81) et une tension auxiliaire (−U$_H$) et est formée par un circuit série formé d'un condensateur à accumulation d'énergie (21) et d'une résistance de décharge (15) et dont l'autre est située entre la sortie du commutateur à valeur de suil (81) et le potentiel de référence et contient au moins une résistance de charge (13, 14).

3. Convertisseur sans blocage suivant l'une des revendications 1 et 2, caractérisé par le fait que l'entrée (+) de la grandeur de mesure du commutateur à valeur de seuil (81) est raccordée au condensateur (23) d'un circuit série à condensateur-résistance (23, 19) relié à la sortie (a, b) du circuit de sortie (92), et que le condensateur (23) du circuit série à condensateur-résistance (23, 19) et une source de tension de référence (U$_{Ref}$) sont reliés à une même borne (a), constituant un point de référence, de la sortie (a, b), et que la borne du condensateur (23), qui applique la tension par rapport au point de référence, est raccordée par l'intermédiaire d'un diviseur de tension (16, 17) à l'entrée (+) de la grandeur de mesure du commutateur à valeur de seuil (81), et que cette entrée (+) est reliée par l'intermédiaire d'une autre résistance (18) à une borne, située du côté sortie, d'une bobine d'arrêt (36) servant de source pour une tension proportionnelle à la tension d'entrée (U$_e$), et que la résistance (17) du diviseur de tension (16, 17), qui est située entre la borne du condensateur (23) appliquant la tension et le commutateur à valeur de seuil (81), est shuntée par un condensateur (24).

4. Convertisseur sans blocage suivant la revendication 3, caractérisé par le fait que la valeur de résistance (19) du circuit série à condensateur-résistance (23, 19) est dimensionnée de manière à être inférieure d'au moins un ordre de grandeur à la valeur de résistance (16, 17) du diviseur de tension.

**Claims**

1. A single-ended forward converter with a pulse-width controlled semiconductor switch (41) in the converter main circuit, and with a power transformer (31) having a plurality of secondary windings (311, 312) for the generation of electrically isolated d.c. output voltages, where at least one output circuit of the single-ended forward converter contains a transistor switch (42) which is pulse-width controlled in dependence upon the output voltage (U22) of this output circuit and which possesses its own auxiliary control circuit whose output pulses occur within the output pulses of the semiconductor switch (41) in the main circuit and which is rendered conductive at the same time as the control transistor located in the converter main circuit, the transistor (42) being arranged in an output circuit that is rendered inoperative by short-circuiting a winding (71) of a pulse-control transformer (7) in dependence upon the output voltage (U22) of the corresponding output circuit, the pulse transformer (7) being preceded by a switch-on device and a switch-off device and the emitter-collector path of a transistor (43) of the switch-off device arranged parallel to a winding (71) of the pulse transformer (7), characterised in that the switch-on device is formed by a series arrangement of a resistor (12) and a diode (57), and that a winding (74) of the pulse transformer is connected via the series arrangement (12, 57) to a separate switch-on winding (311) of the power transformer (31), and that the switch-off device contains a threshold-value switch (81) having an open collector output, whose first input (+) is supplied with a control value which is dependent upon the output voltage and whose other input (—) is supplied with a comparison value ($U_{Ref}$) and which has its output connected via a timer circuit in the form of a mono-stable flip-flop stage which contains a capacitor (21) and a charge resistor (13 ... 15), to that transistor (43) of the switch-off device whose emitter-collector path is arranged parallel to a separate switch-off winding (71) of the pulse transformer (7).

2. A forward converter as claimed in Claim 1, characterised in that the timer circuit contains two current paths, one located between the output of the threshold-value switch (81) and an auxiliary voltage (—$U_H$) and is formed by a series arrangement of a storage capacitor (21) and a discharge resistor (15), and the other of which is located between the output of the threshold-value switch (81) and reference potential and contains at least one charge resistor (13, 14).

3. A forward converter as claimed in one of Claims 1 and 2, characterised in that the measured value input (+) of the threshold-value switch (81) is connected to the capacitor (23) of a capacitor in series with a resistor (23, 19) connected to the output (a, b) of the output circuit (92), and that the capacitor (23) of the series capacitor-resistor arrangement (23, 19) and a comparison voltage source ($U_{Ref}$) are connected to one and the same terminal (a) of the output (a, b) which forms a reference point, and that that terminal of the capacitor (23) which conducts voltage relative to the reference point leads via a voltage divider (16, 17) to the measured value input (+) of the threshold-value switch (81), and that the measured value input (+) leads via a further resistor (18) to an input-end terminal of a choke (36) as a voltage source proportional to the input voltage ($U_e$), and that the resistor (17), located between the voltage-conducting terminal of the capacitor (23) and the threshold-value switch (81), of the voltage divider (16, 17) is bridged by a capacitor (24).

4. A forward converter as claimed in Claim 3, characterised in that the value of the resistor (19) of the series capacitor-resistor arrangement (23, 19) is at least one order of magnitude smaller than the value of the resistors (16, 17) of the voltage divider.

# FIG1

## FIG 2

a) $J_{C41}$

b) $U_{51}$

c) $J_{C42}$

d) $U_{52}$

e) $U_{ke}$

$t_S$

$t_S$

f) $U_{a81}$

g) $J_{B43}$

$t_1$

$t_v$